# DEMANDE DE BREVET EUROPEEN

(11) **EP 3 705 848 A1**
(43) Date de publication de la demande: **09.09.2020**
(21) Numéro de dépôt: 20159730.9
(22) Date de dépôt: 27.02.2020
(51) Int. Cl.: G01C 23/00, G01C 21/00, G08G 5/04, G08G 5/00

(54) **PROCÉDÉ ET SYSTÈME DE PERCEPTION 3D AUGMENTÉE D'ENVIRONNEMENT LIÉ AU SOL AUTOUR D'UN AÉRONEF ET D'ANTICIPATION DES MENACES POTENTIELLES D'ENVIRONNEMENT**

(30) Priorité: 07.03.2019 FR 1902310
(71) Demandeur: Thales, 92400 Courbevoie (FR)
(72) Inventeur: RUEFF, Xavier, 31100 TOULOUSE (FR); GANILLE, Thierry, 33700 MERIGNAC (FR); BASTAREAUD, Betty, 31100 TOULOUSE (FR); DEMOMENT, Ronan, 31100 TOULOUSE (FR)
(74) Mandataire: Tanguy, Yannick

(57) **Abrégé**

Un procédé de perception tridimensionnelle augmentée d'environnement lié au sol autour d'un aéronef et d'anticipation des menaces potentielles dudit environnement est mis en œuvre par un système de perception 3D augmentée d'environnement autour de l'aéronef comprenant un calculateur électronique de perception tridimensionnelle augmentée d'environnement et d'aide au pilotage, une base de données d'obstruction, et un afficheur de vol principal PFD (302), inclus dans un système de vision synthétique SVS ou dérivé.

Le procédé de perception tridimensionnelle augmenté d'environnement et d'anticipation de menaces potentielles d'environnement comportant :
- une première étape (204) de calcul d'une courbe panoramique de pente minimale sécuritaire fonction de l'angle azimutal de vision depuis l'aéronef dans un plan horizontal local ; et
- une deuxième étape (206), consécutive et exécutée sur commande, d'affichage de la courbe panoramique de pente minimale sécuritaire (304) et d'éventuelles informations d'aide au pilotage.

## Description

La présente invention concerne un procédé avionique et un système avionique de perception tridimensionnelle augmentée d'environnement lié au sol autour d'un aéronef et d'anticipation des menaces potentielles dudit environnement, des options d'échappement aux dites menaces pouvant être proposées à l'aide d'un affichage conforme, en fusionnant une représentation en perspective tridimensionnelle du terrain avoisinant l'aéronef et d'informations synthétiques d'aide au pilotage de l'aéronef, cohérentes du vecteur-vitesse dudit aéronef.

La présente invention concerne en particulier un procédé et un système d'affichage tridimensionnel conforme du terrain et d'informations synthétiques d'aide au pilotage d'un aéronef, cohérentes du vecteur-vitesse dudit aéronef, et configurées pour augmenter spatialement le champ de vision tridimensionnel classique des menaces potentielles de terrain entourant l'aéronef et temporellement la diversité des options de pilotage d'échappement auxdites menaces.

Le domaine technique de l'invention englobe celui des procédés et systèmes de perception de terrain et d'alertes de collision TAWS (en anglais « Terrain Awareness and Warning System ») et des systèmes d'affichage comme un système de vision synthétique SVS (en anglais « Synthetic Vision System », un système de vision augmentée EVS (en anglais « Enhanced Vision System »), CVS (en anglais « Combining Vision System »), et/ou des afficheurs de vision conforme, tête haute HUD (en anglais « Head Up Display ») ou tête haute porté HWD (en anglais « Head Worn Display »), l'exigence d'une fourniture d'un vecteur-vitesse (en anglais « flight path vector ») devant être satisfaite.

Lorsqu'un aéronef vole proche d'une menace venant du sol, le pilote ou l'équipage a besoin de comprendre la configuration ou l'état de son environnement, et dans le cas d'une alerte de protection vis-à-vis d'une menace de terrain, par exemple une collision avec le sol, le pilote doit prendre des décisions rapides et exactes concernant les manœuvres d'échappement que doit effectuer l'aéronef pour éviter les menaces sans dépasser ses capacités à effectuer de telles manœuvres.

Dans le cas d'alertes de terrain, les systèmes actuels de protection TAWS, et plus particulièrement les systèmes HTAWS (en anglais « Helicopter TAWS ») dédiés aux hélicoptères, fournissent une assistance au pilote au travers de deux moyens d'affichage :
- un affichage d'une représentation bidimensionnelle 2D représentant les menaces de terrain suivant un premier moyen,
- un affichage d'une représentation tridimensionnelle 3D conforme des menaces de terrain suivant un deuxième moyen qui utilise un système de vision synthétique (SVS) ou un système de vision dérivé d'un SVS.

Un affichage d'une vue bidimensionnelle 2D des menaces de terrain a été introduit dans les avions de ligne dans les années 1990s au travers de la fonction TAWS pour satisfaire l'exigence d'un affichage d'une vue bidimensionnelle 2D de terrain avoisinant aux altitudes proches de celle de l'aéronef, d'un déclenchement et d'un affichage d'une alerte pour un terrain menaçant.

Ce type d'affichage est bien adapté pour des aéronefs qui ne volent pas à proximité du sol hors des phases de décollage et d'atterrissage, compte tenu qu'il fournit surtout les informations nécessaires pour l'exécution de manœuvres d'échappement vertical.

Toutefois, un inconvénient de l'affichage d'une vue bidimensionnelle 2D décrit ci-dessus est notamment le fait que, lorsque l'aéronef vole le long d'un canyon ou d'une vallée en dessous de l'altitude des montagnes, toutes les cimes des montagnes apparaissent avec le deuxième indicateur visuel de menace potentielle (par exemple la couleur rouge), aucune indication n'étant fournie par conséquent concernant la capacité réelle de manœuvrer l'aéronef au dessus des cimes montagneuses.

La demande de brevet WO 2016/193975 A1, constituant un premier document, décrit de manière détaillée un système et un procédé amélioré de calcul et d'affichage d'une vue bidimensionnelle 2D des menaces potentielles de terrain qui résout l'inconvénient précité en prenant en compte à la fois les données concernant la cinématique en temps réel de l'aéronef et les données de performance de l'aéronef, désignées également par données « d'enveloppe de performance ou de vol », concernant la capacité d'ascension de l'aéronef en fonction notamment de l'élévation, la température, le poids et la vitesse horizontale.

Le premier document décrit un procédé avionique et un système avionique de calcul et d'affichage de la perception de terrain avoisinant un aéronef et de menaces potentielles de collision avec le sol, configurés pour :
- calculer à un instant actuel et à partir d'une position actuelle de la trajectoire d'un aéronef, pour chaque point d'une partie d'un terrain avoisinant l'aéronef audit instant actuel, si l'aéronef peut ou ne peut pas manœuvrer au-dessus dudit point de terrain avec un jeu ou espacement (en anglais « clearance ») de dégagement sécuritaire, fixé par une marge sécuritaire prédéterminée, et fournir une carte ou un graphe de correspondance entre les projections des points dans la partie de terrain dans le plan latéral de la trajectoire et le booléen exprimant la capacité ou la non capacité de l'aéronef à survoler lesdits points de manière sécuritaire ; et
- afficher la carte 2D bidimensionnelle calculée en faisant correspondre à la projection latérale de chaque point de la partie de terrain un premier indicateur visuel (par exemple la couleur jaune lorsque l'aéronef est capable de survoler de manière sécuritaire ledit point ou un deuxième indicateur visuel différent (par exemple la couleur rouge), distinct du premier indicateur visuel, lorsque l'aéronef n'est pas capable de survoler de manière sécuritaire ledit point.

Toutefois, les procédé et système avioniques du premier document présentent l'inconvénient de ne pas fournir d'informations précises concernant la pente d'ascension des trajectoires d'échappement ne serait ce que pour une seule d'entre elles, de ne pas fournir de critère nuancée de la performance demandée à l'aéronef en fonction de la trajectoire d'échappement, et de ne pas fournir une vision tridimensionnelle 3D conforme de l'environnement de l'aéronef, clairement et intuitivement perceptible dans laquelle les informations des dangers de terrain dans leur dimension verticale sont plus immédiatement et clairement perceptibles.

La demande de brevet EP 2 224 216 A1, constituant un deuxième document, répond partiellement aux inconvénients précités et décrit un système et un procédé de calcul et d'affichage d'une vue tridimensionnelle 3D de l'environnement de terrain d'un aéronef. La vue tridimensionnelle 3D, affichée par l'afficheur principal de vol PFD (en anglais « Primary Flight Display »), est une vue synthétique en perspective conforme du terrain avoisinant l'aéronef en temps réel ou quasiment en temps réel. Le terrain remplit l'écran de l'afficheur principal de vol PFD. L'afficheur principal de vol PFD est configuré pour inclure dans la vue 3D un élément de guidage d'évitement de terrain, affiché de manière conforme par rapport au terrain. Cet élément de guidage communique visuellement au pilote des instructions, des directives, ou des préférences, de navigation et de contrôle, lorsqu'un terrain potentiellement menaçant approche. Le pilote peut ainsi déterminer rapidement et facilement la meilleure façon de manœuvrer l'aéronef au voisinage de la partie de terrain formant obstruction. De manière préférée, l'élément de guidage est coordonné de manière intuitive avec le symbole de représentation du vecteur-vitesse en temps réel, de sorte que le pilote peut déterminer visuellement où diriger l'aéronef, et donc son vecteur-vitesse, pour éteindre l'alerte d'évitement de terrain.

Suivant le deuxième document, l'élément de guidage d'évitement de terrain n'est affiché que lorsqu'à l'instant actuel de vol une menace de collision terrain a été détectée par le système de perception de terrain et d'alerte TAWS et reste focalisé sur la menace de terrain dans la limite du champ de vue et d'analyse du TAWS. Une seule manœuvre d'évitement est suggérée par l'élément de guidage d'évitement de terrain et elle concerne une zone locale de la cime de l'obstacle à éviter avec essentiellement une composante d'échappement verticale, la seule composante déterminée avec exactitude.

Ainsi, les procédé et système avioniques du deuxième document présentent l'inconvénient de se limiter spatialement et temporellement aux menaces de terrain et alertes déclenchées par le système TAWS et de négliger le rôle bénéfique de manœuvres éventuelles, à composante latérale unique ou composante latérale mixte en combinaison avec une composante d'échappement verticale, hors du champ de directions analysé par le TAWS et pouvant aller jusqu'à un demi-tour complet de l'aéronef, et pouvant être anticipé plus tôt pour fournir un pilotage d'échappement suffisant et plus doux sans sur-réaction.

A cet égard, les pilotes ont exprimé le besoin de disposer d'informations leur permettant de décider de l'opportunité et du bien fondé d'une manœuvre latérale d'échappement adéquate, pouvant aller jusqu'à effectuer un demi-tour si nécessaire, et l'exigence d'un temps d'interprétation de leur part de ladite manœuvre le plus court possible, en raison du fait que des décisions urgentes peuvent être nécessaires, les systèmes et procédés actuels ne permettant pas de satisfaire de telles exigences.

Un premier problème technique que résout l'invention est de fournir un procédé avionique et un système avionique de perception augmentée de terrain et d'anticipation des menaces potentielles de terrain, utilisant un système de vision synthétique 3D de terrain ou dérivé avec un vecteur-vitesse conforme, dans lequel le champ de perception des menaces de terrain entourant l'aéronef et des options d'échappement auxdites menaces est élargi par rapport aux systèmes avioniques actuels de perception de terrain et d'alertes.

Un deuxième problème technique que résout l'invention est d'enrichir et d'affiner par un procédé avionique et un système avionique de perception augmentée de terrain et d'anticipation des menaces potentielles de terrain le spectre des options d'échappement sur les composantes latérales des manœuvres jusqu'à faire effectuer à l'aéronef des manœuvres de demi-tour.

Un troisième problème technique que résout l'invention est de fournir un procédé avionique et un système avionique de perception augmentée de terrain et d'anticipation des menaces potentielles de terrain qui permettent d'éviter une sur-réaction de pilotage vis-à vis des menaces de terrain par une meilleure anticipation desdites menaces et un spectre plus large des manœuvres d'évitement possibles.

Un quatrième problème technique que résout l'invention est d'améliorer le contenu et la forme de l'affichage en l'enrichissant de la perception de terrain sur un afficheur principal de vol et de pilotage présentant un vecteur-vitesse conforme et intégré dans un système de vision synthétique SVS ou dérivé.

A cet effet, l'invention a pour objet un procédé de perception tridimensionnelle augmentée d'environnement lié au sol autour d'un aéronef et d'anticipation des menaces potentielles dudit environnement. Le procédé de perception 3D augmentée d'environnement et d'anticipation des menaces potentielles d'environnement est mis en en oeuvre par un système de perception 3D augmentée d'environnement autour de l'aéronef et de menaces potentielles d'environnement comprenant :
- un calculateur électronique de perception tridimensionnelle augmentée d'environnement et d'aide a pilotage ; et
- une base de données d'obstruction configurée pour fournir au calculateur électronique de perception de l'environnement des données modélisant un ensemble d'objets d'obstruction susceptibles d'être des menaces d'environnement pour l'aéronef ; et
- un afficheur de vol principal PFD, inclus dans un système de vision synthétique SVS ou dérivé, et configuré pour afficher de manière conforme dans la représentation de terrain un symbole de vecteur-vitesse. Le procédé de perception tridimensionnelle augmenté d'environnement et d'anticipation de menaces potentielles d'environnement comporte :
- une première étape de calcul d'une courbe panoramique d'une pente sécuritaire minimale fonction de l'angle azimutal de vision depuis l'aéronef dans un plan horizontal local ; et
- une deuxième étape, consécutive et exécutée sur commande, d'affichage de la courbe panoramique de pente minimale sécuritaire et d'éventuelles informations d'aide au pilotage.

Suivant des modes particuliers de réalisation, le procédé de perception 3D augmentée d'environnement lié au sol et d'anticipation des menaces potentielles dudit environnement comprend l'une ou plusieurs des caractéristiques suivantes, prises isolément ou en combinaison :
- la première étape de calcul comporte : une première sous-étape au cours de laquelle, à un instant actuel t la position d'un point O(t+Tr) de référence et d'un début éventuel t+Tr de manœuvre d'évitement est calculée en suivant la trajectoire actuelle de l'aéronef en partant de la position actuelle O(t) de l'aéronef à l'instant t pendant une durée prédéterminée Tr qui correspond à un temps de réaction ou de réponse ; une deuxième sous-étape consécutive au cours de laquelle, pour chaque objet d'obstruction d'un ensemble OB1(t) d'objets d'obstruction, situés dans un rayon prédéterminé R du voisinage latéral ou horizontal de l'aéronef par rapport au point O(t+Tr) et en dehors du voisinage latéral de l'aéronef par rapport au pont O(t) dans un rayon de réaction Rr, égal à la distance latérale entre les points O(t) et O(t+Tr), avec R nettement supérieur à Rr, une composante de trajet horizontal ou de vol latéral pour atteindre l'enveloppe de l'objet d'obstruction de ensemble OB1(t) d'objets d'obstruction est calculée ;
- la durée prédéterminée Tr qui correspond à un temps de réaction ou de réponse est typiquement compris entre 0 et 2 secondes ; et/ou chaque trajet latéral est composé d'un virage avec un taux de virage standardisé en fonction du type de l'aéronef et des capacités de manœuvre de l'aéronef, et/ou d'un segment rectiligne successif depuis la sortie du virage jusqu'à l'objet d'obstruction ;
- les menaces d'environnement lié au sol pour l'aéronef concernent les menaces de terrain incluant le terrain géographique et des obstacles artificiels et concernent des volumes d'espace aérien interdits en raison de leur atteinte possible par des projectiles lancés depuis le sol ;
- les objets d'obstruction de l'ensemble OB1(t), traités dans la deuxième sous-étape sont fournis par la deuxième base de données des objets d'obstruction ;
- la première étape de calcul comporte une troisième sous-étape au cours de laquelle, pour chaque objet d'obstruction de l'ensemble OB1(t), une marge M est ajoutée à l'élévation du point-enveloppe dudit objet d'obstruction et la pente entre le point O(t+Tr) atteint en suivant après l'instant actuel t la trajectoire de l'aéronef pendant la durée prédéterminée Tr de temps de réaction et le point de survol à la distance d'évitement sécuritaire M du point enveloppe de l'objet d'obstruction est calculé en considérant la trajectoire horizontale déterminée dans la deuxième sous-étape ;
- la première étape de calcul comporte une quatrième sous-étape, exécutée après la troisième sous-étape et au cours de laquelle les objets d'obstruction de l'ensemble OB1(t) sont regroupés par direction azimutale de visibilité depuis l'aéronef dans des secteurs ou pinceaux de directions azimutale de même largeur ou pas de résolution angulaire n, le pas de résolution angulaire n étant exprimé par exemple en degré(s) ;
- la première étape de calcul comporte une cinquième sous-étape, exécutée après la quatrième sous-étape et au cours de laquelle, pour chaque pinceau de directions azimutales balayant un champ de vue azimutal de l'aéronef, le maximum des pentes minimales de sécurité des objets d'obstruction contenus dans ledit pinceau de directions azimutales est déterminé par le calculateur de perception 3D augmentée du terrain entourant l'aéronef, de sorte qu'à chaque pinceau de directions azimutales est associé un point dont l'abscisse est l'angle azimutal moyen du pinceau le long de l'axe azimutal horizontal actuel de l'aéronef et l'ordonnée est la valeur maximale des pentes minimales de sécurité des objets d'obstruction contenus dans le pinceau, ladite valeur maximale étant dénommée « pente minimale sécuritaire dudit pinceau de directions azimutales » ;
- la courbe panoramique de pente minimale de sécurité qui est fonction de la direction azimutale, considérée dans le plan horizontale actuelle de l'aéronef, est une courbe interpolant de manière régulière les points calculés dans la cinquième sous-étape, associés respectivement aux pinceaux de directions azimutales balayant le champ de vue azimutal de l'aéronef ;
- le champ de vue azimutal de l'aéronef balayé par les pinceaux de directions azimutales est plus grand que le champ azimutal d'un sous-système de perception classique de terrain et d'alertes, notamment un système de type TAWS, de manière préférée nettement plus grand, c'est-à-dire au moins deux fois plus grand ;
- la première étape de calcul comporte une sixième sous-étape dans laquelle : pour chaque direction azimutale, la position du point associé de la courbe panoramique de pente minimale de sécurité est comparée à la pente maximale réalisable effectivement par l'aéronef dans la mesure fixée par l'enveloppe de performance de l'aéronef ; et pour chaque direction azimutale considérée, le rapport de l'ordonnée du point associé de la courbe panoramique de pente minimale de sécurité, i.e. la pente minimale sécuritaire, sur la pente maximale réalisable par l'aéronef est calculé puis codé par un code de couleur ou de motif de ligne, représentatif d'un niveau de facilité à survoler de manière sécuritaire l'obstacle d'obstruction ;
- la première étape de calcul comporte une septième sous-étape, exécutée après la sixième sous-étape, et dans laquelle une condition ou un critère d'affichage de la ligne panoramique de pente sécuritaire est calculée en comparant la position de la courbe panoramique de pente minimale sécuritaire à la position du vecteur-vitesse actuel ; et s'il existe une direction azimutale pour laquelle la différence de position entre le vecteur-vitesse et le point associé de la courbe panoramique de pente minimale sécuritaire devient trop basse, c'est-à-dire si l'ordonnée en tangage du vecteur-vitesse moins la pente minimale sécuritaire du point correspondant de la courbe panoramique est inférieure ou égale à une valeur seuil positive prédéterminée, une commande d'affichage de la courbe panoramique de pente minimale sécuritaire et d'éventuels éléments d'information en support est envoyé ;
- la deuxième étape d'affichage est mise en œuvre lorsqu'une commande d'affichage est reçue par l'afficheur principal de vol ; et au cours de la deuxième étape d'affichage, l'afficheur principal de vol PFD affiche, en les fusionnant de manière conforme, la courbe panoramique de pente minimale sécuritaire et en support un premier élément graphique d'information et/ou un deuxième élément graphique d'information et/ou en support un troisième élément graphique d'information et/ou en support un quatrième élément graphique d'information ;
- l'affichage de la courbe panoramique de pente minimale sécuritaire est effectué de manière conforme dans le champ de vue large de l'afficheur de vol principal ; et/ou le premier élément graphique concerne l'affichage pour chaque pinceau de direction azimutale d'un rapport calculé et codé de la pente minimale de sécurité sur la pente maximale d'ascension réalisable par l'aéronef, sous la forme d'une couleur ou d'un motif de trait correspondant suivant un codage choisi du rapport calculé ; et/ou le deuxième élément graphique d'information concerne la capacité à trouver une pente sécuritaire en dehors du champ de vue de l'afficheur de vol principal pour des directions azimutales qui ne peuvent pas être affichées dans le champ de vue de l'afficheur ; et il est formé d'une barre, affichée sur un côté de l'écran PFD, indiquant le virage maximal possible avec une attitude de virage sécuritaire à la vitesse actuelle ; et/ou le troisième élément graphique d'information concerne un élément graphique indiquant l'angle de roulis minimum nécessaire pour effectuer un échappement latéral sécuritaire, et en cas d'une alerte déclenchée, indique les angles de roulis « interdits » sur une échelle de roulis ; et/ou le quatrième élément graphique d'information concerne des informations de surveillance corrélées avec le système TAWS ou d'autres systèmes d'alertes, et il est affiché sur ou à proximité immédiate de la courbe panoramique de pente minimale sécuritaire de sorte à mettre en évidence la zone d'opération du système d'alerte TAWS ou des autres systèmes d'alerte, en augmentant l'épaisseur de trait de la courbe panoramique de pente minimale de sécurité dans ladite zone du ou des systèmes d'alertes.

L'invention a également pour objet un système de perception tridimensionnelle augmentée d'environnement lié au sol autour d'un aéronef et d'anticipation de menaces potentielles dudit environnement :
- un calculateur électronique de perception tridimensionnelle augmentée d'environnement et d'aide a pilotage ; et
- une base de données d'obstruction configurée pour fournir au calculateur électronique de perception de l'environnement des données modélisant un ensemble d'objets d'obstruction susceptibles d'être des menaces d'environnement pour l'aéronef ; et
- un afficheur de vol principal PFS, inclus dans un système de vision synthétique SVS ou dérivé, et configuré pour afficher de manière conforme dans la représentation de terrain un symbole de vecteur-vitesse. Le calculateur électronique de perception tridimensionnelle augmentée d'environnement et d'aide a pilotage, la base de données d'obstruction, et l'afficheur de vol principal sont configurés pour exécuter un procédé de perception 3D augmentée d'environnement et d'anticipation des menaces potentielles de l'environnement tel que défini ci-dessus.

Suivant des modes particuliers de réalisation, le système de perception tridimensionnelle augmentée d'environnement lié au sol autour d'un aéronef et d'anticipation de menaces potentielles de terrain comprend l'une ou plusieurs des caractéristiques suivantes, prises isolément ou en combinaison :
- le calculateur électronique de perception 3D augmentée d'environnement et d'aide au pilotage est intégré avec et couplé à un sous-système de pilotage automatique de sorte à faire exécuter de manière automatique par ledit sous-système de pilotage automatique une manœuvre préférée d'échappement de secours, en fournissant au sous-système de pilotage automatique une cible de guidage définie par un couple de paramètres, caractéristiques de la cible, formée par premier paramètre de pente et un deuxième paramètre de trajectoire latérale.

L'invention a également pour objet un afficheur principal de vol PFD pour afficher des données de perception 3D augmentée d'environnement lié au sol et d'aide au pilotage d'un aéronef, l'afficheur principal de vol étant inclus dans un système de vision synthétique SVS ou dérivé, et configuré pour afficher de manière conforme un symbole de vecteur-vitesse. L'afficheur principal de vol est configuré pour afficher en outre en tant qu'élément graphique de base un courbe panoramique de pente minimale sécuritaire, telle que définie ci-dessus, ainsi que des éléments graphiques d'informations complémentaire de perception 3D et/ou d'aide au pilotage, formés par :
- un premier élément graphique de coloration de la ligne panoramique de pente minimale sécuritaire, par un spectre de couleurs, associées aux différentes manœuvres d'évitement correspondant aux directions azimutales du champ de vue du PFD et représentatives des degrés de facilité d'exécution desdites manœuvres d'évitement ; et/ou
- un deuxième élément graphique concernant des informations de surveillance, notamment la zone azimutale balayée, d'un système d'information de surveillance de terrain et d'alertes ; et/ou
- un troisième élément graphique, disposé sur un côté de l'écran de pilotage du PFD, désignant une limite de virage sous la forme d'une barre et d'une valeur indiquant la trajectoire ou piste de sécurité maximale en cas d'incapacité pour l'aéronef d'exécuter un demi-tour ; et/ou
- un quatrième élément graphique concernant une plage d'angle de roulis dangereux ou « interdits » ; et/ou
- un cinquième élément graphique désignant la direction relative correspondante à un changement de direction maximal lorsque la limite de virage est hors du champ de vue de l'écran d'affichage ; et/ou
- un sixième élément graphique d'affichage désignant une cible de guidage proposée au pilote et affichée le long de la ligne de pente sécuritaire minimale.

L'invention sera mieux comprise à la lecture de la description de plusieurs formes de réalisation qui va suivre, donnée uniquement à titre d'exemple et faite en se référant aux dessins sur lesquels :
[Fig.1] représente une vue de la composante verticale d'une manœuvre d'évitement typique servant à déterminer une courbe panoramique de pente minimale sécuritaire selon l'invention ;
[Fig.2] représente une vue de la composante des manœuvres latérales d'évitement d'obstacles, susceptibles de devenir des menaces de terrain autour de l'aéronef et disposés autour de l'aéronef ;
[Fig.3] représente une vue d'un système de perception tridimensionnelle augmentée du terrain et d'aide au pilotage selon l'invention ;
[Fig.4] représente un ordinogramme d'un procédé de perception tridimensionnelle augmentée de terrain et d'aide au pilotage selon l'invention ;
[Fig.5] représente une vue d'un afficheur de vue tridimensionnelle selon l'invention, configuré pour afficher de manière conforme dans un environnement tridimensionnel de terrain des informations de perception tridimensionnelle augmentée de terrain et d'aide au pilotage, élaborée par les système et procédé avioniques des Figures 3 et 4.

De manière générale, le concept de l'invention est fondé sur la possibilité d'anticiper les menaces de terrains dans leur diversité et de s'en prémunir assez tôt, en augmentant la perception de l'environnement de terrain de l'aéronef et des menaces terrestres potentielles, en élargissant les options d'échappement par l'exploitation d'une éventuelle composante latérale des manœuvres d'échappement, et en fusionnant les informations de surveillance avec autres fonctions, de pilotage notamment dans un système de vison synthétique ou dérivé.

Le système avionique et le procédé avionique de perception augmentée d'environnement lié au sol et d'alertes potentielles selon l'invention sont également fondés sur l'utilisation de systèmes de vision synthétiques SVS, de vision augmentée EVS, de vison combinée CVS combinant un SVS et EVS, ainsi qu'à l'utilisation des technologies d'afficheurs tête haute, qui permettent d'afficher des informations conformes sur la vue d'un terrain réel. Ces systèmes de vision présentent habituellement un vecteur-vitesse (en anglais « Flight path director ») qui indique au pilote où l'aéronef est actuellement en train de voler dans la perspective d'une vision d'un terrain réel ou d'un terrain synthétisé ou d'un terrain augmenté par une symbologie ou ensemble de symboles.

Le terme « environnement lié au sol » ou de manière abrégée « environnement » désigne, ici et par la suite, le terrain et/ou des volumes d'espace aérien interdits en raison de leur atteinte possible par des projectiles lancés depuis le sol, par exemple par des batterie de défense anti-aériennes.

Le terme « terrain » désigne, ici et par la suite et de manière générale, la surface naturelle du sol telle que représentée par des données topographiques et tout objet d'obstruction qui est situé sur la surface naturelle topographique comme par exemple des arbres et/ou des obstacles artificiels tels que des immeubles, des antennes et des pylônes.

Le système avionique et le procédé avionique, de perception augmentée de l'environnement tridimensionnel lié au sol autour de l'aéronef et d'aide au pilotage pour anticiper sans sur-réactions les menaces potentielles dudit environnement, sont fondés principalement sur le calcul d'une courbe panoramique de pente minimale sécuritaire, établie sur une zone de terrain d'intérêt ROI (en anglais « Région Of Interest ») qui s'étend autour de l'aéronef suivant un rayon fixé prédéterminé R, correspondant à une durée prédéterminée d'un vol en ligne droite de l'aéronef à la vitesse sol actuelle, et fondé sur l'affichage conforme de cette courbe panoramique sur un écran principal de navigation et de pilotage, utilisant un système de vision 3D synthétique et ayant un vecteur-vitesse représenté de manière conforme.

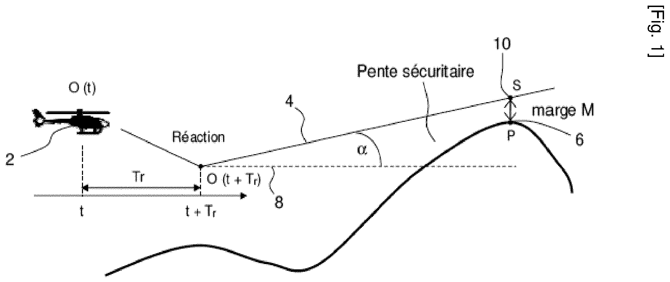

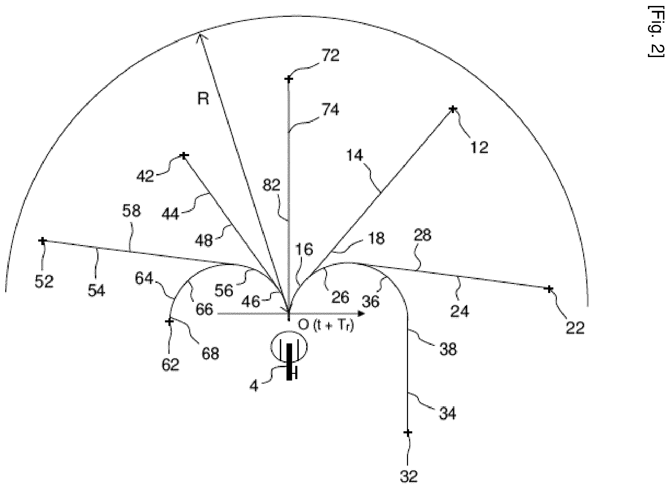

Suivant les Figures 1 et 2, le calcul de la courbe panoramique plane de pente minimale sécuritaire est fondée, pour chaque direction azimutale de l'aéronef, représentable le long de son axe azimutal à roulis nul, et pour chaque point d'enveloppe d'un obstacle situé dans ladite direction à une distance latérale inférieure ou égal au rayon fixé prédéterminé R de la zone d'intérêt ROI, sur une modélisation générique d'une trajectoire d'ascension, de survol et de rejointe latérale dudit point enveloppe de l'obstacle.

Chaque trajectoire d'ascension, de survol et de rejointe latérale d'un point enveloppe d'obstacle associé est supposée succéder à une phase de réaction comme décrit à titre d'exemple sur la Figure 1.

Suivant la Figure 1, l'aéronef 2, par exemple ici un hélicoptère, est supposé, à partir d'un instant actuel t de mesure des paramètres cinématiques de l'aéronef 2, continuer son vol actuel pendant une première durée prédéterminée Tr, correspondant à la durée de réaction pour le démarrage effectif de la manœuvre, en supposant qu'une commande de pilotage correspondante à cette manœuvre a été envoyée par le pilote, jusqu'à un point O(t+Tr) de début de la trajectoire 4 d'ascension, de survol et de rejointe latérale associée au point enveloppe P 6 de l'obstacle, choisi par le pilote. Il est à remarquer que les paramètres concernant la phase de réaction, et in fine la détermination du temps de réaction, peuvent être adaptés pour prendre en compte le comportement d'autres fonctions comme par exemple le TAWS.

Ici sur la Figure 1, le point enveloppe P 6 de l'obstacle est la cime d'une montagne. La pente sécuritaire, notée *α*, est la pente par rapport à l'horizontale terrestre 8 de la composante verticale de la trajectoire 4 d'ascension, de survol et de rejointe du point enveloppe P en le point S, situé au dessus du point P à la distance M correspondant à la marge ou jeu d'évitement sécuritaire (en anglais « terrain clearance »).

Le calcul de la ligne de pente minimale sécuritaire est fondé sur la définition de la manœuvre d'échappement « la plus naturelle » que le pilote devra exécuter en fonction de la direction azimutal choisie à l'instant actuel courant, et qui prend en compte le degré de serrage du virage, et le séquençage du virage et l'ascension en ligne droite, afin d'améliorer le caractère intuitif de la performance.

La trajectoire verticale sécuritaire est calculée pour chaque point de terrain ou chaque obstacle présent dans le voisinage proche de l'aéronef en tenant compte du virage exigé nécessaire pour atteindre le point.

Si l'atteinte d'un point d'obstacle exige d'effectuer partiellement un virage la performance d'ascension dans le virage est considérée.

Suivant la Figure 2, un ensemble 2 de points enveloppe d'obstacles et des trajectoires latérales de rejointe et de survol associées est illustré à titre d'exemple.

Ici, l'aéronef 4 est par exemple un hélicoptère qui se trouve à l'instant effectif t+Tr de réalisation de la manœuvre au point O(t+Tr).

Un premier point enveloppe d'obstacle 12 est associé à une première trajectoire de rejointe latérale14 qui se décompose en un premier tronçon de virage 16 partant du point O(t+Tr), lequel est suivi d'un deuxième tronçon rectiligne 18 qui atteint le premier point enveloppe d'obstacle 12.

Un deuxième point enveloppe d'obstacle 22 est associé à une deuxième trajectoire de rejointe latérale 24 qui se décompose en un premier tronçon de virage 26 de deuxième trajectoire partant du point O(t+Tr), lequel est suivi d'un deuxième tronçon rectiligne 28 de deuxième trajectoire qui atteint le premier point enveloppe d'obstacle 22.

Un troisième point enveloppe d'obstacle 32 est associé à une troisième trajectoire de rejointe latérale 34 qui se décompose en un premier tronçon de virage 36 de deuxième trajectoire partant du point O(t+Tr), lequel est suivi d'un deuxième tronçon rectiligne 38 de troisième trajectoire qui atteint le troisième point enveloppe d'obstacle 32.

Un quatrième point enveloppe d'obstacle 42 est associé à une quatrième trajectoire de rejointe latérale 44 qui se décompose en un premier tronçon de virage 46 de quatrième trajectoire partant du point O(t+Tr), lequel est suivi d'un deuxième tronçon rectiligne 48 de quatrième trajectoire qui atteint le quatrième point enveloppe d'obstacle 42.

Un cinquième point enveloppe d'obstacle 52 est associé à une cinquième trajectoire de rejointe latérale 54 qui se décompose en un premier tronçon de virage 56 de cinquième trajectoire partant du point O(t+Tr), lequel est suivi d'un deuxième tronçon rectiligne 58 de cinquième trajectoire qui atteint le cinquième point enveloppe d'obstacle 52.

Un sixième point enveloppe d'obstacle 62 est associé à une sixième trajectoire de rejointe latérale 64 qui se décompose en un premier tronçon de virage 66 de sixième trajectoire partant du point O(t+Tr), lequel est suivi d'un deuxième tronçon rectiligne 68 de sixième trajectoire qui atteint le sixième point enveloppe d'obstacle 62.

Un septième pont enveloppe d'obstacle 72 est associé à une septième trajectoire 74 qui est limité à un segment rectiligne 78 partant du point O(t+Tr) et allant jusqu'au septième point enveloppe d'obstacle 72.

La direction latérale de vision d'un point enveloppe d'obstacle donné est l'angle formé entre la direction de vision du point enveloppe d'obstacle et la direction horizontale longitudinale 82 de l'aéronef 4, l'angle étant orienté dans le sens horaire, i.e. positivement de gauche à droite sur la Figure 1.

Ainsi, la direction de vision du septième point enveloppe d'obstacle 72 correspond à un angle azimutal de l'aéronef de valeur nulle, les directions de vision des premier et deuxième points enveloppe d'obstacle 12, 22 correspondent à des angles azimutaux de l'aéronef positifs de premier quadrant compris entre 0 et +90 degrés, la direction du troisième point enveloppe d'obstacle 32 correspond à un angle azimutal de l'aéronef positif de deuxième quadrant compris entre +90 et +180 degrés, la direction de vision du sixième point d'obstacle 62 correspond à un angle azimutal de l'aéronef négatif de troisième quadrant compris entre -90 et -180 degrés, et les directions de vision des quatrième et cinquième points enveloppe d'obstacle 42, 52 correspondent à des angles azimutaux de l'aéronef négatif de quatrième quadrant compris entre 0 et -90 degrés.

Ainsi, la direction de vision du septième point enveloppe d'obstacle 72 correspond à un angle azimutal de l'aéronef de valeur nulle, les directions de vision des premier et deuxième points enveloppe d'obstacle 12, 22 correspondent à des angles azimutaux de l'aéronef positifs de premier quadrant compris entre 0 et +90 degrés, la direction du troisième point enveloppe d'obstacle 32 correspond à un angle azimutal de l'aéronef positif de deuxième quadrant compris entre +90 et +180 degrés, la direction de vision du sixième point d'obstacle 62 correspond à un angle azimutal de l'aéronef négatif de troisième quadrant compris entre -90 et -180 degrés, et les directions de vision des quatrième et cinquième points enveloppe d'obstacle 42, 52 correspondent à des angles azimutaux de l'aéronef négatif de quatrième quadrant compris entre 0 et -90 degrés.

Il est à remarquer d'autres formes géométriques des trajectoires latérales de rejointe et de survol, non nécessairement limitées à un virage ou un segment de droite ou l'enchainement d'un virage et d'un segment rectiligne, peuvent être envisagées.

Le procédé avionique et le système avionique de perception 3D augmentée de terrain et d'anticipation des menaces de terrain selon l'invention sont configurés pour fournir des informations panoramiques pertinentes sur l'environnement de l'aéronef tout autour de ce dernier.

Le système avionique et le procédé avionique selon l'invention sont configurés pour fournir au pilote de l'aéronef davantage d'informations pertinentes concernant la localisation des menaces potentielles d'environnement lié au sol entourant l'aéronef en élargissant la plage angulaire de balayage azimutale. Ainsi, la perception de l'environnement lié au sol pour le pilote est améliorée lorsque l'aéronef se rapproche du sol et le pilote est en outre aidé pour élaborer avec un temps d'anticipation allongé la meilleure stratégie d'évitement vertical et latéral des menaces potentielles dudit environnement.

Les informations fournies au pilote, en intégrant les paramètres de vol actuels et les possibilités actuelles de manœuvres de l'aéronef, i.e. les possibilités d'ascension, les contraintes d'un virage de rebroussement pour l'aéronef, permettent au pilote de choisir la meilleure manœuvre d'échappement réalisable.

Une caractéristique secondaire des procédé et système avioniques selon l'invention est leur capacité à fournir des informations d'aide au pilotage à un système de pilotage automatique, fonctionnant éventuellement par un apprentissage, dans le cas d'une mise en œuvre automatique des manœuvres d'évitement des menaces de terrain.

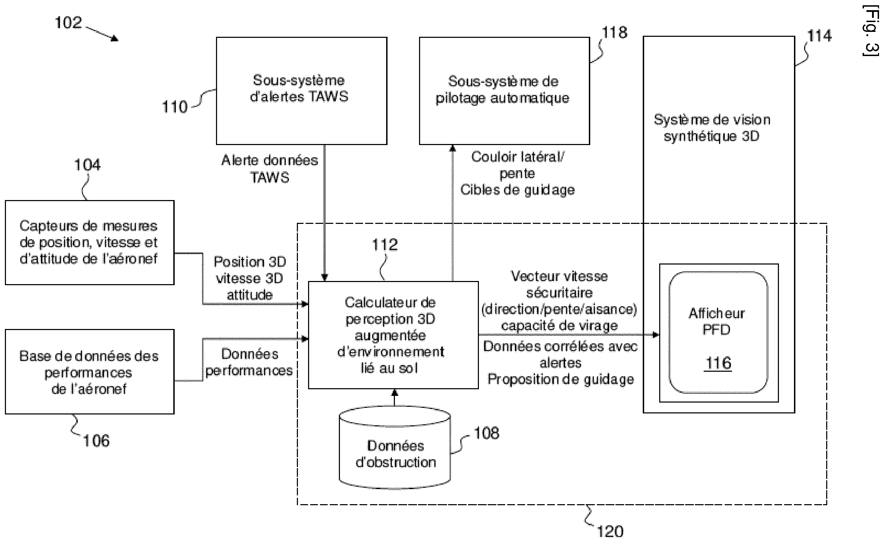

Suivant la Figure 3, un système avionique de navigation et de pilotage 102 d'un aéronef 4 à perception tridimensionnelle augmentée d'environnement lié au sol comprend :
- un ensemble embarqué de capteurs 104 de mesure de la position et de la vitesse de l'aéronef et l'attitude de l'aéronef 4 ;
- une première base de données 106 des performances de l'aéronef ;
- une deuxième base de données 108 d'obstruction contenant des objets d'obstruction, notamment des obstacles modélisés du terrain avoisinant l'aéronef ;
- un sous-système d'alertes de terrain 110 ;
- un calculateur 112 de perception augmentée tridimensionnelle de l'environnement lié au sol entourant l'aéronef et d'anticipation des menaces potentielles dudit environnement par une aide au pilotage ;
- un système de vision synthétique SVS ou dérivé 114, incluant un afficheur de vol principal PFS 116, configuré pour afficher de manière conforme dans la représentation du terrain un symbole de vecteur-vitesse ; et
- un sous-système de pilotage automatique 118 de manière optionnelle.

L'ensemble embarqué des capteurs 104 de mesure de la position, de la vitesse et de l'attitude de l'aéronef est configuré pour mesurer à chaque instant, en temps réel ou quasiment en temps réel, la cinématique et l'attitude de l'aéronef 4, et fournir à chaque instant au calculateur de perception tridimensionnelle augmentée de l'environnement et d'aide au pilotage des données de positions et de vitesses tridimensionnelles du centre de gravité de l'aéronef et d'attitudes de l'aéronef.
L'ensemble embarqué des capteurs de mesure 104 de la cinématique et de l'attitude de l'aéronef comprend par exemple :
- un altimètre barométrique, par exemple un dispositif ADC (en anglais « Air Data Computer »), ou un système de navigation global par satellites GNSS (en anglais « Global Navigation Satellite System » pour mesurer l'altitude de l'aéronef ;
- un système de navigation global par satellites GNSS, éventuellement hybridé avec des données d'inertie fournies par un ou plusieurs capteurs inertiels pour mesurer les positions horizontales de l'aéronef et leur suivi ;
- un capteur de la vitesse air, par exemple un capteur ADC et/ou un système de navigation global par satellites GNSS, et/ou éventuellement un système inertiel pour mesurer les vitesses horizontales et verticales de l'aéronef ;
- un système d'attitude ou de référence inertiel AHRS/IRS (en anglais « Attitude and Heading Reference System » / « Inertial Reference System ») pour mesurer les attitudes de l'aéronef.

La première base de données 106 de performance de l'aéronef est configurée pour fournir au calculateur 112 de perception tridimensionnelle augmentée du terrain et d'aide au pilotage des données de performance de l'aéronef, désignées également par données « d'enveloppe de performance ou de vol », concernant la capacité d'ascension de l'aéronef en fonction notamment de l'élévation, la température, le poids et la vitesse horizontale.

La deuxième base 108 des données d'obstruction est configurée pour fournir au calculateur 112 de perception tridimensionnelle augmentée de l'environnement et d'aide au pilotage des données modélisant un ensemble d'objets d'obstruction susceptibles d'être des menaces d'environnement pour l'aéronef.

Le sous-système d'alertes 108 est par exemple un système classique TAWS de perception de terrain et d'alertes.

Le calculateur 112 de perception augmentée de l'environnement et d'aide au pilotage vis-à-vis des menaces temporelles, l'afficheur principal 116 de vol, et la deuxième base 108 des données d'obstruction forment ensemble un système 120 de perception augmentée de l'environnement et d'anticipation des menaces potentielles d'environnement.

Le calculateur 112 de perception augmentée tridimensionnelle de l'environnement et d'aide au pilotage est un ensemble d'un ou plusieurs calculateurs.

Le calculateur 112 de perception augmentée du terrain et d'anticipation des menaces potentielles est configuré pour évaluer des options d'échappement.

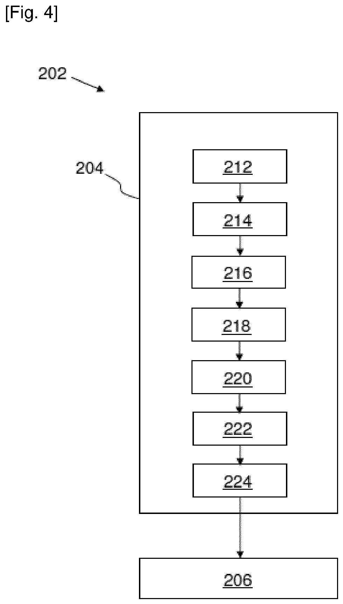

Suivant la Figure 4, un procédé 202 de perception 3D augmentée de l'environnement lié au sol et d'anticipation des menaces potentielles d'environnement, de calcul et d'affichage de la ligne de pente de sécurité minimale, mis en œuvre par le calculateur de perception augmentée tridimensionnelle de l'environnement, comprend un ensemble d'étapes, exécutées successivement.

Le procédé de perception 3D augmentée et l'algorithme correspondant de mise en œuvre dudit procédé sont fondés sur une analyse d'un modèle numérique 3D de l'environnement, notamment le terrain et divers obstacles qui entourent l'aéronef, établi à partir de données statiques et/ou de détection dynamique. L'analyse de ce modèle numérique 3D de l'environnement de terrain permet de calculer la composante verticale d'une trajectoire de vol à pente sécuritaire minimale dont le suivi garantit un jeu minimal d'espacement vertical entre le terrain et l'aéronef, ce jeu minimal étant fixé par la marge de sécurité M.

Le procédé 202 de perception 3D augmentée de l'environnement lié au sol et d'anticipation des menaces potentielles d'environnement dans le voisinage de l'aéronef comprend une première étape 204 de calcul d'une courbe panoramique de la pente de sécurité minimale en fonction de l'angle azimutal de vision depuis l'aéronef considéré dans un plan horizontal parallèle au plan du sol et contenant le centre de gravité G de l'aéronef, et ensuite une deuxième étape 206 d'affichage de la courbe panoramique de pente minimale sécuritaire et d'éventuels éléments d'information en support est exécutée lorsque l'afficheur reçoit une commande d'affichage des éléments graphiques concernant la perception 3D augmentée de l'environnement autour de l'aéronef et l'aide au pilotage vis-à-vis de menace(s) potentielle(s) de l'environnement identifiée(s).

La première étape 204 comprend un ensemble de sous-étapes 212, 214, 216, 218, 220, 222 et 224.

Dans une première sous-étape 212, à un instant actuel t la position d'un point O(t+Tr) de référence et d'un début éventuel de manœuvre d'évitement est calculée en suivant la trajectoire actuelle de l'aéronef en partant de la position actuelle O(t) de l'aéronef à l'instant t pendant une durée prédéterminée Tr qui correspond à un temps de réaction ou de réponse, typiquement compris entre 0 et 2 secondes.

Puis dans une deuxième sous-étape 214, pour chaque objet d'obstruction d'un ensemble OB1(t) d'objets d'obstruction, situés dans un rayon prédéterminé R du voisinage latéral ou horizontal de l'aéronef par rapport au point O(t+Tr) et en dehors du voisinage latéral de l'aéronef par rapport au pont O(t) dans un rayon de réaction Rr, égal à la distance latéral entre les points O(t) et O(t+Tr), avec R nettement supérieur à Rr, une composante de trajet horizontal ou de vol latéral pour atteindre l'enveloppe de l'objet d'obstruction de ensemble OB1(t) d'objets d'obstruction est calculée, en considérant un trajet latéral composé d'un virage avec un taux de virage standardisé en fonction du type de l'aéronef (hélicoptère ou avion, civil ou militaire par exemple) et des capacités de manœuvre de l'aéronef, et/ou d'un segment rectiligne successif depuis la sortie du virage jusqu'à l'objet d'obstruction. Les objets d'obstruction de cet ensemble OB1(t) traités dans cette deuxième sous-étape 214 sont fournis par la deuxième base de données 108 des objets d'obstruction. De manière générale, les objets d'obstruction sont modélisés en fonction de la nature de l'obstruction qu'ils sont susceptibles d'opposer à l'aéronef, la nature de l'objet d'obstruction étant comprise dans l'ensemble des obstacles de terrain modélisés par des cellules de terrain, des obstacles artificiels, comme par exemple un immeuble ou un ensemble d'immeubles, modélisés par des volumes, et des espaces aériens interdits modélisés par des cylindres droits.

Ensuite, dans une troisième sous-étape 216, pour chaque objet d'obstruction de l'ensemble OB1(t), une marge M est ajoutée à l'élévation du point-enveloppe dudit objet d'obstruction et la pente entre le point O(t+Tr) atteint en suivant après l'instant actuel t la trajectoire de l'aéronef pendant la durée prédéterminée Tr de temps de réaction et le point de survol à la distance d'évitement sécuritaire M du point enveloppe de l'objet d'obstruction est calculé en considérant la trajectoire horizontale déterminé dans la première étape.

Ensuite, dans une quatrième sous-étape 218, les objets d'obstruction de l'ensemble OB1(t) sont regroupés par direction azimutale de visibilité depuis l'aéronef dans des secteurs ou pinceaux de directions azimutale de même largeur ou pas de résolution angulaire n, le pas de résolution angulaire n étant exprimé par exemple en degré(s).

Dans une cinquième sous-étape 220 consécutive, pour chaque pinceau de directions azimutales balayant un champ de vue azimutal de l'aéronef, le maximum des pentes minimales de sécurité des objets d'obstruction contenus dans ledit pinceau de directions azimutales est déterminé par le calculateur de perception 3D augmentée du terrain entourant l'aéronef. Ainsi à chaque pinceau de directions azimutales est associé un point dont l'abscisse est l'angle azimutal moyen du pinceau le long de l'axe azimutal horizontal actuel de l'aéronef et l'ordonnée est la valeur maximale des pentes minimales de sécurité des objets d'obstruction contenus dans le pinceau, ladite valeur maximale étant dénommée « pente minimale sécuritaire dudit pinceau de directions azimutales ». Une courbe interpolant de manière régulière les points calculés dans la cinquième sous-étape 220, associés respectivement aux pinceaux de directions azimutales balayant le champ de vue azimutal de l'aéronef est appelée « courbe panoramique de pente minimale de sécurité » en fonction de la direction azimutale, considérée dans le plan horizontale actuelle de l'aéronef.

De manière préférée, le champ de vue azimutal de l'aéronef balayé par les pinceaux est plus grand que le champ azimutal d'un sous-système de perception classique de terrain et d'alertes comme par exemple le TAWS, et de manière plus préférée encore nettement plus grand c'est-à-dire au moins deux fois plus grand.

Ensuite, dans une sixième sous-étape 222, pour chaque direction azimutale, la position du point associé de la courbe panoramique de pente minimale de sécurité est comparée à la pente maximale réalisable effectivement par l'aéronef dans la mesure fixée par l'enveloppe de performance de l'aéronef. Pour chaque direction azimutale considérée, le rapport de l'ordonnée du point associé de la courbe panoramique de pente minimale de sécurité, i.e. la pente minimale sécuritaire, sur la pente maximale réalisable par l'aéronef est calculé puis codé par un code de couleur ou de motif de ligne, représentatif d'un niveau de facilité à survoler de manière sécuritaire l'obstacle d'obstruction. Lorsque la pente minimale de sécurité est nettement en dessous de la pente maximale réalisable par l'aéronef, cette pente minimale sécuritaire est considérée comme facile à réaliser et le niveau de facilité est élevé, tandis que lorsque la pente minimale de sécurité est nettement au-dessus de la pente maximale réalisable par l'aéronef, cette pente minimale sécuritaire est considérée comme impossible à réaliser et le niveau de facilité est nul.

Ensuite, dans une septième sous-étape 224, une condition ou un critère d'affichage de la ligne panoramique de pente minimale sécuritaire est calculée en comparant la position de la courbe panoramique de pente minimale sécuritaire à la position du vecteur-vitesse actuel. S'il existe une direction azimutale pour laquelle la différence de position entre le vecteur-vitesse et le point associé de la courbe panoramique de pente minimale sécuritaire devient trop basse, l'ordonnée en tangage du vecteur-vitesse moins la pente minimale sécuritaire du point correspondant de la courbe panoramique est inférieure ou égale à une valeur seuil positive prédéterminée, une commande d'affichage de la courbe panoramique de pente minimale sécuritaire et d'éventuels éléments d'information en support est envoyé.

En variante, une commande d'affichage de la courbe panoramique de pente minimale sécuritaire et d'éventuels éléments d'information en support peut être envoyée de manière arbitraire par le pilote.

Ensuite, lorsqu'une commande d'affichage est reçue par l'afficheur principale de vol, la deuxième étape d'affichage 206 est mise en œuvre.

Au cours de la deuxième étape d'affichage 206, l'afficheur principal de vol PFD affiche, en les fusionnant de manière conforme, la courbe panoramique de pente minimale sécuritaire et en support un premier élément graphique d'information et/ou un deuxième élément graphique d'information et/ou en support un troisième élément graphique d'information et/ou en support un quatrième élément graphique d'information.

L'affichage de la courbe panoramique de pente minimale sécuritaire est effectué de manière conforme dans le champ de vue large de l'afficheur de vol principal.

Le premier élément graphique concerne l'affichage pour chaque pinceau de direction azimutale du rapport calculé et codé de la pente minimale de sécurité sur la pente maximale d'ascension réalisable par l'aéronef, sous la forme par exemple d'une couleur correspondante suivant le codage choisi. Par exemple, le codage est choisi de sorte à suivre la progression des couleurs de l'arc en ciel, en affichant la couleur verte lorsque la pente minimale sécuritaire est très éloignée par valeurs inférieure de la pente maximale réalisable, et en progressant jusqu'à la couleur magenta lorsque la pente minimale sécuritaire est au-dessus de, i.e. dépasse par valeurs supérieures, la pente maximale réalisable. Il est rappelé qu'aucune courbe panoramique de pente minimale sécuritaire n'est affichée tant qu'une commande d'affichage n'a pas été envoyée à l'afficheur principal de vol.

Le deuxième élément graphique d'information concerne la capacité à trouver une pente sécuritaire en dehors du champ de vue de l'afficheur de vol principal pour des directions azimutales qui ne peuvent pas être affichées dans le champ de vue de l'afficheur. Le deuxième élément graphique est formé d'une barre, affichée sur un côté de l'écran PFD, indique le virage maximal possible avec une attitude de virage sécuritaire à la vitesse actuelle. Cette barre indique quel changement maximal de piste ou de couloir horizontal peut être réalisé.

Le troisième élément graphique d'information concerne un élément graphique indiquant l'angle de roulis minimum nécessaire pour effectuer un échappement latéral sécuritaire. Dans le cas d'une alerte déclenchée, les angles de roulis « interdits » sont affichés sur une échelle de roulis de sorte que le pilote comprenne l'attitude minimale à atteindre pour récupérer ou retrouver une situation sécuritaire.

Le quatrième élément graphique d'information concerne des informations de surveillance corrélées avec le système TAWS ou d'autres systèmes d'alertes. Afin de simplifier l'interprétation des alertes associées aux obstructions, le quatrième élément graphique est affiché sur ou à proximité immédiate de la courbe panoramique de pente minimale sécuritaire de sorte à mettre en évidence la zone d'opération du système d'alerte TAWS ou des autres systèmes d'alerte, par exemple en augmentant l'épaisseur de trait de la courbe panoramique de pente minimale de sécurité dans ladite zone du ou des systèmes d'alertes. Ce quatrième élément graphique aide le pilote pour corréler les alertes avec la perception 3D augmentée de l'environnement de terrain fusionnée dans l'image 3D de l'environnement externe de l'aéronef, réel ou synthétisé.

De manière optionnelle, un sous-système de pilotage automatique comme celui décrit par exemple dans le brevet US9978286 B2, peut être intégré au système selon l'invention de perception 3D augmentée du terrain et d'aide au pilotage tel décrit dans les Figures 1 à 4, de sorte à exécuter de manière automatique une manœuvre préférée d'échappement de secours, dans le cas où le pilote ne réagit pas à temps aux alertes déclenchées.

Dans ce cas, la cible de guidage, fournie au sous-système de pilotage automatique, est définie par un couple de paramètres caractéristiques de la cible, un premier paramètre de pente et un premier paramètre de trajectoire. Ces paramètres sont calculés en analysant la ligne de pente sécuritaire minimale dans toutes les directions pour décider quelles trajectoire et pente devraient être suivies pour minimiser la probabilité de collision, même dans le cas où aucune trajectoire satisfaisante et sécuritaire n'a été trouvée selon les hypothèses prises pour le calcul de la ligne de pente minimale. Pour cela, il est considéré que la trajectoire « la moins mauvaise » fournira les meilleures conditions au pilote pour adapter sa manœuvre d'évitement, même après qu'un évitement automatique a commencé.

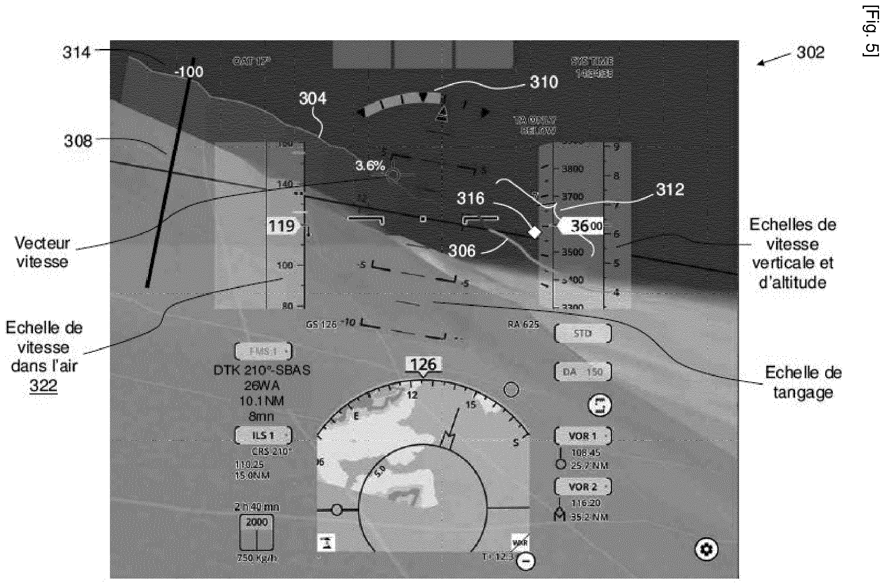

Comme illustrée sur la Figure 5, l'afficheur PFD du système de perception 3D augmentée de l'environnement lié au sol et d'anticipation des menaces d'environnement est configuré pour superposer les informations pertinentes dudit système de perception 3D augmentée du terrain et d'anticipation des menaces de terrain, notamment la courbe panoramique de pente minimale sécuritaire avec les informations de pilotage, affichées classiquement de manière conforme sur le champ de vue central du PFD et incluant notamment le symbole du vecteur vitesse.

La méthode préférée pour inclure les possibilités de manœuvre dans les informations affichées est d'utiliser un ensemble intuitif de couleurs différentes pour décrire un élément graphique. L'ensemble des couleurs est choisi de manière à correspondre à l'ensemble de couleurs déjà utilisées classiquement pour les autres informations usuelles de perception d'alerte, en variant depuis la couleur verte pour désigner des manœuvres facilement exécutables jusqu'à la couleur magenta pour désigner des manœuvres difficilement exécutables sinon critiques.

L'afficheur selon l'invention est configuré pour intégrer des répliques d'évitement à l'écran de pilotage ou afficheur de vol principal d'une manière cohérente avec les paramètres de vol principaux, en superposant les dites répliques avec le système de vision synthétique, voire le système de vision combiné ou l'écran tête haute ou tout afficheur présentant un vecteur-vitesse (en anglais « Flight Path Vector »).

Suivant la Figure 5 et un mode de réalisation préférée de l'affichage, l'afficheur PFD 302 selon l'invention est configuré pour afficher en tant qu'élément graphique de base la courbe panoramique 304 de pente minimale sécuritaire ainsi que des éléments graphiques d'informations complémentaire de perception 3D et/ou d'aide au pilotage.

Un premier élément graphique 306 désigne la ligne panoramique de pente minimale sécuritaire, colorée par un spectre de couleurs, associées aux différentes manœuvres d'évitement correspondant aux directions azimutales du champ de vue du PFD et représentatives des degrés de facilité d'exécution desdites manœuvres d'évitement.

Un deuxième élément graphique 308, disposé ici à gauche sur l'écran de pilotage du PFD, désigne une limite de virage. La méthode préférée pour afficher une trajectoire sécuritaire située en dehors du champ de vue de l'affichage de vol principal est l'affichage d'une barre et d'une valeur indiquant la trajectoire ou piste (track) de sécurité maximale en cas d'incapacité pour l'aéronef d'exécution d'un demi-tour.

Un troisième élément graphique 312 désigne une plage d'angle de roulis dangereux ou « interdit ». En cas de menace venant face à l'aéronef, les angles d'inclinaison qui conduiraient à une collision en raison d'une marge sécuritaire insuffisante sont présentés au pilote avec une logique ou un codage par des couleurs similaire à celui utilisé par les systèmes anticollision TCAS (en anglais « Traffic Collision Avoidance System ») sur l'échelle de vitesse verticale pour décrire les domaines de non vol.

Un quatrième élément graphique 312 concerne des informations de surveillance comme par exemple la zone balayée par le système d'information TAWS, ce qui permet au pilote de comprendre plus précisément le contexte de déclenchement des alertes.

Un cinquième élément graphique 314 désigne la direction relative correspondante à un changement de direction maximal lorsque la limite de virage est hors du champ de vue de l'écran d'affichage.

Un sixième élément graphique d'affichage 316 désigne la cible de guidage proposée au pilote et affiché le long de la ligne de pente sécuritaire minimale.

Cet affichage permet au pilote d'avoir une lecture intermédiaire des menaces actuelles et de choisir la manœuvre d'échappement la plus appropriée, en prenant également en compte les capacités de manœuvrabilité de l'aéronef.

La solution proposée fournit des informations à court-terme, adaptés à des décisions de pilotage à court-terme : la zone balayée couvre seulement quelques secondes de vol au-delà la position actuelle de l'aéronef, adaptée pour un échappement immédiat et ignorant des trajectoires à moyen et long terme.

Ces éléments minimisent le risque de sur-réaction en fournissant la manœuvre minimale à exécuter pour voler en sécurité et éviter les menaces terrestres.

La solution proposée inclut des procédés qui anticipe des menaces et qui fournissent à temps des informations en avance pour aider le pilote à éviter les situations d'alerte sans surcharger l'afficheur si aucune menace n'est survenue.

La solution proposée inclut la fusion de l'information de la trajectoire de sécurité minimale avec des informations ajoutées concernant le système d'alerte associé, afin d'aider le pilote à corréler les informations en provenance des différentes fonctions de perception et d'alerte.

La solution inclut le calcul et l'affichage de l'angle minimal de roulis à réaliser pour éviter une collision avec une menace en approche sur la trajectoire de vol actuellement suivi.

En fusionnant des informations concernant l'environnement terrestre avec des informations de pilotage, l'invention rend plus facile la gestion de situations critiques, y compris dans des conditions de commande d'un aéronef sans équipage à bord.

## Revendications

1. Procédé de perception tridimensionnelle augmentée d'environnement lié au sol autour d'un aéronef (4) et d'anticipation des menaces potentielles dudit environnement ;
- Le procédé de perception 3D augmentée d'environnement et d'anticipation des menaces potentielles d'environnement étant mis en en œuvre par un système de perception 3D augmentée d'environnement autour de l'aéronef (4) et de menaces potentielles d'environnement comprenant :
- un calculateur électronique (112) de perception tridimensionnelle augmentée d'environnement et d'aide a pilotage ; et
- une base de données d'obstruction (108) configurée pour fournir au calculateur électronique de perception de l'environnement des données modélisant un ensemble d'objets d'obstruction susceptibles d'être des menaces d'environnement pour l'aéronef ; et
- un afficheur de vol principal PFD (116), inclus dans un système de vision synthétique SVS (114) ou dérivé, et configuré pour afficher de manière conforme dans la représentation de terrain un symbole de vecteur-vitesse ;
Le procédé de perception tridimensionnelle augmenté d'environnement et d'anticipation de menaces potentielles d'environnement comportant :
- une première étape (204) de calcul d'une courbe panoramique représentant l'évolution d'une pente sécuritaire minimale de franchissement d'obstacles en fonction de l'angle azimutal de l'aéronef dans son plan horizontal local de déplacement latéral ; et
- une deuxième étape (206), consécutive et exécutée sur commande, d'affichage de la courbe panoramique de pente minimale sécuritaire et d'éventuelles informations d'aide au pilotage.

2. Procédé de perception 3D augmentée d'environnement lié au sol et d'anticipation des menaces potentielles dudit environnement selon la revendication 1, dans lequel la première étape de calcul comporte :
- une première sous-étape (212) au cours de laquelle, à un instant actuel t la position d'un point O(t+Tr) de référence et d'un début éventuel t+Tr de manœuvre d'évitement est calculée en suivant la trajectoire actuelle de l'aéronef en partant de la position actuelle O(t) de l'aéronef (4) à l'instant t pendant une durée prédéterminée Tr qui correspond à un temps de réaction ou de réponse ;
- une deuxième sous-étape (214) consécutive au cours de laquelle, pour chaque objet d'obstruction d'un ensemble OB1(t) d'objets d'obstruction, situés dans un rayon prédéterminé R du voisinage latéral ou horizontal de l'aéronef par rapport au point O(t+Tr) et en dehors du voisinage latéral de l'aéronef par rapport au pont O(t) dans un rayon de réaction Rr, égal à la distance latérale entre les points O(t) et O(t+Tr), avec R nettement supérieur à Rr, une composante de trajet horizontal ou de vol latéral pour atteindre l'enveloppe de l'objet d'obstruction de ensemble OB1(t) d'objets d'obstruction est calculée.

3. Procédé de perception 3D augmentée d'environnement lié au sol et d'anticipation des menaces potentielles dudit environnement selon la revendication 2 dans lequel
la durée prédéterminée Tr qui correspond à un temps de réaction ou de réponse est typiquement compris entre 0 et 2 secondes ; et/ou
chaque trajet latéral est composé d'un virage avec un taux de virage standardisé en fonction du type de l'aéronef et des capacités de manœuvre de l'aéronef, et/ou d'un segment rectiligne successif depuis la sortie du virage jusqu'à l'objet d'obstruction.

4. Procédé de perception 3D augmentée d'environnement lié au sol et d'anticipation des menaces potentielles d'environnement selon l'une des revendications 1 à 3, dans lequel
les menaces d'environnement lié au sol pour l'aéronef concernent les menaces de terrain incluant le terrain géographique et des obstacles artificiels et concernent des volumes d'espace aérien interdits en raison de leur atteinte possible par des projectiles lancés depuis le sol.

5. Procédé de perception 3D augmentée d'environnement lié au sol et d'anticipation des menaces potentielles de terrain selon la revendication 2, dans lequel
les objets d'obstruction de l'ensemble OB1(t), traités dans la deuxième sous-étape (214) sont fournis par une deuxième base de données (108) des objets d'obstruction.

6. Procédé de perception 3D augmentée d'environnement lié au sol et d'anticipation des menaces potentielles dudit environnement selon l'une des revendications 2 à 5, dans lequel la première étape de calcul comporte :
- une troisième sous-étape (216) au cours de laquelle, pour chaque objet d'obstruction de l'ensemble OB1(t), une marge M est ajoutée à l'élévation du point-enveloppe dudit objet d'obstruction et la pente entre le point O(t+Tr) atteint en suivant après l'instant actuel t la trajectoire de l'aéronef (4) pendant la durée prédéterminée Tr de temps de réaction et le point de survol à la distance d'évitement sécuritaire M du point enveloppe de l'objet d'obstruction est calculé en considérant la trajectoire horizontale déterminée dans la deuxième sous-étape.

7. Procédé de perception 3D augmentée d'environnement lié au sol et d'anticipation des menaces potentielles dudit environnement selon la revendication 6, dans lequel la première étape de calcul comporte :
- une quatrième sous-étape (218), exécutée après la troisième sous-étape (216) et au cours de laquelle les objets d'obstruction de l'ensemble OB1(t) sont regroupés par direction azimutale de visibilité depuis l'aéronef dans des secteurs ou pinceaux de directions azimutale de même largeur ou pas de résolution angulaire n, le pas de résolution angulaire n étant exprimé par exemple en degré(s).

8. Procédé de perception 3D augmentée d'environnement lié au sol et d'anticipation des menaces potentielles dudit environnement selon la revendication 7, dans lequel la première étape de calcul comporte :
- une cinquième sous-étape (220), exécutée après la quatrième sous-étape (218) et au cours de laquelle, pour chaque pinceau de directions azimutales balayant un champ de vue azimutal de l'aéronef, le maximum des pentes minimales de sécurité des objets d'obstruction contenus dans ledit pinceau de directions azimutales est déterminé par le calculateur de perception 3D augmentée du terrain entourant l'aéronef, de sorte qu'à chaque pinceau de directions azimutales est associé un point dont l'abscisse est l'angle azimutal moyen du pinceau le long de l'axe azimutal horizontal actuel de l'aéronef et l'ordonnée est la valeur maximale des pentes minimales de sécurité des objets d'obstruction contenus dans le pinceau, ladite valeur maximale étant dénommée « pente minimale sécuritaire dudit pinceau de directions azimutales ».

9. Procédé de perception 3D augmentée d'environnement lié au sol et d'anticipation des menaces potentielles dudit environnement selon la revendication 8, dans lequel
la courbe panoramique de pente minimale de sécurité qui est fonction de la direction azimutale, considérée dans le plan horizontale actuelle de l'aéronef, est une courbe interpolant de manière régulière les points calculés dans la cinquième sous-étape (220), associés respectivement aux pinceaux de directions azimutales balayant le champ de vue azimutal de l'aéronef.

10. Procédé de perception 3D augmentée d'environnement lié au sol et d'anticipation des menaces potentielles dudit environnement selon la revendication 9, dans lequel
le champ de vue azimutal de l'aéronef balayé par les pinceaux de directions azimutales est plus grand que le champ azimutal d'un sous-système de perception classique de terrain et d'alertes, notamment un système de type TAWS, de manière préférée nettement plus grand, c'est-à-dire au moins deux fois plus grand.

11. Procédé de perception 3D augmentée d'environnement lié au sol et d'anticipation des menaces potentielles dudit environnement selon l'une quelconque des revendications 1 à 10, dans lequel la première étape de calcul comporte une sixième sous-étape (222) dans laquelle :
- pour chaque direction azimutale, la position du point associé de la courbe panoramique de pente minimale de sécurité est comparée à la pente maximale réalisable effectivement par l'aéronef dans la mesure fixée par l'enveloppe de performance de l'aéronef ; et
- pour chaque direction azimutale considérée, le rapport de l'ordonnée du point associé de la courbe panoramique de pente minimale de sécurité, i.e. la pente minimale sécuritaire, sur la pente maximale réalisable par l'aéronef est calculé puis codé par un code de couleur ou de motif de ligne, représentatif d'un niveau de facilité à survoler de manière sécuritaire l'obstacle d'obstruction.

12. Procédé de perception 3D augmentée d'environnement lié au sol et d'anticipation des menaces potentielles dudit environnement selon la revendication 11, dans lequel la première étape de calcul comporte
une septième sous-étape (224), exécutée après la sixième sous-étape (222), et dans laquelle une condition ou un critère d'affichage de la ligne panoramique de pente sécuritaire est calculée en comparant la position de la courbe panoramique de pente minimale sécuritaire à la position du vecteur-vitesse actuel ; et s'il existe une direction azimutale pour laquelle la différence de position entre le vecteur-vitesse et le point associé de la courbe panoramique de pente minimale sécuritaire devient trop basse, c'est-à-dire si l'ordonnée en tangage du vecteur-vitesse moins la pente minimale sécuritaire du point correspondant de la courbe panoramique est inférieure ou égale à une valeur seuil positive prédéterminée, une commande d'affichage de la courbe panoramique de pente minimale sécuritaire et d'éventuels éléments d'information en support est envoyé.

13. Procédé de perception 3D augmentée d'environnement lié au sol et d'anticipation des menaces potentielles dudit environnement selon l'une des revendications 1 à 12 dans lequel
la deuxième étape d'affichage (206) est mise en œuvre lorsqu'une commande d'affichage est reçue par l'afficheur principal de vol ; et
au cours de la deuxième étape d'affichage (206), l'afficheur principal de vol PFD affiche, en les fusionnant de manière conforme, la courbe panoramique de pente minimale sécuritaire et en support un premier élément graphique d'information et/ou un deuxième élément graphique d'information et/ou en support un troisième élément graphique d'information et/ou en support un quatrième élément graphique d'information.

14. Procédé de perception 3D augmentée d'environnement lié au sol et d'anticipation des menaces potentielles dudit environnement selon la revendication 13 dans lequel
- l'affichage de la courbe panoramique de pente minimale sécuritaire est effectué de manière conforme dans le champ de vue large de l'afficheur de vol principal ; et/ou
- le premier élément graphique concerne l'affichage pour chaque pinceau de direction azimutale d'un rapport calculé et codé de la pente minimale de sécurité sur la pente maximale d'ascension réalisable par l'aéronef, sous la forme d'une couleur ou d'un motif de trait correspondant suivant un codage choisi du rapport calculé ; et/ou
- le deuxième élément graphique d'information concerne la capacité à trouver une pente sécuritaire en dehors du champ de vue de l'afficheur de vol principal pour des directions azimutales qui ne peuvent pas être affichées dans le champ de vue de l'afficheur ; et il est formé d'une barre, affichée sur un côté de l'écran PFD, indiquant le virage maximal possible avec une attitude de virage sécuritaire à la vitesse actuelle ; et/ou
- le troisième élément graphique d'information concerne un élément graphique indiquant l'angle de roulis minimum nécessaire pour effectuer un échappement latéral sécuritaire, et en cas d'une alerte déclenchée, indique les angles de roulis « interdits » sur une échelle de roulis ; et/ou
- le quatrième élément graphique d'information concerne des informations de surveillance corrélées avec le système TAWS ou d'autres systèmes d'alertes, et il est affiché sur ou à proximité immédiate de la courbe panoramique de pente minimale sécuritaire de sorte à mettre en évidence la zone d'opération du système d'alerte TAWS ou des autres systèmes d'alerte, en augmentant l'épaisseur de trait de la courbe panoramique de pente minimale de sécurité dans ladite zone du ou des systèmes d'alertes.

15. Système de perception tridimensionnelle augmentée d'environnement lié au sol autour d'un aéronef et d'anticipation des menaces potentielles dudit environnement comprenant :
- un calculateur électronique (112) de perception tridimensionnelle augmentée d'environnement et d'aide a pilotage ; et
- une base de données d'obstruction (108) configurée pour fournir au calculateur électronique de perception de l'environnement des données modélisant un ensemble d'objets d'obstruction susceptibles d'être des menaces d'environnement pour l'aéronef ; et
- un afficheur de vol principal PFS (116), inclus dans un système de vision synthétique SVS (114) ou dérivé, et configuré pour afficher de manière conforme dans la représentation de terrain un symbole de vecteur-vitesse ;
le calculateur électronique (112) de perception tridimensionnelle augmentée d'environnement et d'aide a pilotage, la base de données d'obstruction, et l'afficheur de vol principal étant configurés pour exécuter un procédé de perception 3D augmentée d'environnement et d'anticipation des menaces potentielles de l'environnement, défini selon l'une des revendications 1 à 12.

16. Système de perception tridimensionnelle augmentée d'environnement lié au sol autour d'un aéronef et d'anticipation des menaces potentielles dudit environnement selon la revendication 15, dans lequel
le calculateur électronique (112) de perception 3D augmentée d'environnement et d'aide au pilotage est intégré avec et couplé à un sous-système de pilotage automatique (118) de sorte à faire exécuter de manière automatique par ledit sous-système de pilotage automatique (118) une manœuvre préférée d'échappement de secours, en fournissant au sous-système de pilotage automatique une cible de guidage définie par un couple de paramètres, caractéristiques de la cible, formée par premier paramètre de pente et un deuxième paramètre de trajectoire latérale.

17. Afficheur principal de vol PFD pour afficher des données de perception 3D augmentée d'environnement lié au sol et d'aide au pilotage d'un aéronef,
l'afficheur principal de vol étant inclus dans un système de vision synthétique SVS (114) ou dérivé, et configuré pour afficher de manière conforme un symbole de vecteur-vitesse ; et
l'afficheur principal de vol étant configuré pour afficher en outre en tant qu'élément graphique de base un courbe panoramique (304) de pente minimale sécuritaire, définie selon l'une des revendications 1 à 6, ainsi que des éléments graphiques d'informations complémentaire de perception 3D et/ou d'aide au pilotage, formés par :
- un premier élément graphique (306) de coloration de la ligne panoramique de pente minimale sécuritaire, par un spectre de couleurs, associées à différentes manœuvres d'évitement correspondant aux directions azimutales du champ de vue du PFD et représentatives des degrés de facilité d'exécution desdites manœuvres d'évitement ; et/ou
- un deuxième élément graphique (308) concernant des informations de surveillance, notamment la zone azimutale balayée, d'un système d'information de surveillance de terrain et d'alertes ; et/ou
- un troisième élément graphique (310), disposé sur un côté de l'écran de pilotage du PFD, désignant une limite de virage sous la forme d'une barre et d'une valeur indiquant la trajectoire ou piste de sécurité maximale en cas d'incapacité pour l'aéronef d'exécuter un demi-tour ; et/ou
- un quatrième élément graphique (312) concernant une plage d'angle de roulis dangereux ou « interdits » ; et/ou
- un cinquième élément graphique (314) désignant la direction relative correspondante à un changement de direction maximal lorsque la limite de virage est hors du champ de vue de l'écran d'affichage ; et/ou
- un sixième élément graphique d'affichage (316) désignant une cible de guidage proposée au pilote et affichée le long de la courbe de pente sécuritaire minimale.
